# EUROPEAN PATENT APPLICATION

(11) **EP 4 545 283 A1**
(43) Date of publication of application: **30.04.2025**
(21) Application number: 23205286.0
(22) Date of filing: 23.10.2023
(51) Int. Cl.: B29D 11/00, G02B 5/28

(54) **METHOD FOR MANUFACTURING AN INTERFERENCE FILTER**

(71) Applicant: trinamiX GmbH, 67063 Ludwigshafen am Rhein (DE)
(72) Inventor: VALOUCH, Sebastian, 67059 Ludwigshafen am Rhein (DE)
(74) Representative: Altmann Stößel Dick Patentanwälte PartG mbB

(57) **Abstract**

The present invention refers to a method (110) for manufacturing an interference filter (120) having at least two sections (124) of different filter properties, the method (110) comprising:
(1) providing an interference filter (120) having at least two layers (122), wherein the at least two layers (122) have different refractive indices;
(2) compressing at least a portion of the interference filter (120) by using a mold (142) in a manner that at least two different sections (124) of the interference filter (120) are generated, wherein the at least two different sections (124) have different heights (126).

## Description

### Technical Field

The invention relates to a method for manufacturing an interference filter, an interference filter, a spectrometer device for obtaining at least one item of spectral information and to a mobile communication device. Such devices and methods can, in general, be used for investigating or monitoring purposes, in particular, in the infrared (IR) spectral region, especially in the near-infrared (NIR) spectral region, and in the visible (VIS) spectral region, e.g. in a spectral region allowing to mimic a human's ability of color sight. However, further applications are feasible.

### Background art

Spectrometer devices are known to be efficient tools for obtaining information on the spectral properties of an object, when emitting, irradiating, reflecting and/or absorbing light. Spectrometer devices, thus, may assist in analyzing samples or other tasks in which information on the spectral properties of an object is of interest. Such spectrometer devices, typically, comprise optical filters, particularly interference filter for splitting detection light that is incident into to spectrometer device in a plurality of separated wavelength ranges.

Typically, the requirement is to have a plurality of spatially small bandpass filters for different wavelengths, such as nine different wavelengths over a wavelength range from 1.5 µm to 2.0 µm, that are spaced very closely together. Such bandpass filters may be manufactured by depositing material onto a rigid substrate, such as a glass, quartz and/or silicon substrate. These filters are then cut into small plates and glued into a filter holder assembly.

This approach may have several drawbacks. The sawing process may result in chipping at the edge of the substrate. This chipping may restrict the usable active area of the filter, since chipped areas may cause stray light and, therefore, may have to be covered with an opaque material. The chipping width may be reduced to 30 µm with current sawing processes, but at typical filter widths of 0.35 mm the resulting loss of 0.07 mm at the edge may represent a severe limit to light throughput. Further, dicing processes may become challenging, once the filter elements reach cubic shapes, meaning that the lateral dimensions come close to the thickness of the substrate. At the same time reducing the substrate thickness below 0.3 mm may result in handling issues in wafer processing, which may further limit the minimum size of optical filters to, exemplarily, 0.3 mm x 0.3 mm. This, particularly, may limit the potential for size reductions required for spectrometer device used in mobile communication devices. Further, the filter holder walls may have a minimum thickness, which may restricted by the injection moulding process. Typical values may be around 0.2 mm wall thickness.

### Problem to be solved

It is therefore desirable to provide methods and devices, which at least partially address the above-mentioned technical challenges and at least substantially avoid the disadvantages of known methods and devices. In particular, it is an object of the present invention to provide a method for manufacturing an interference filter, an interference filter, a spectrometer device for obtaining at least one item of spectral information and to a mobile communication device, which are capable of decreasing and/or having a decreased size of the interference filter.

### Summary

This problem is addressed by a method for manufacturing an interference filter, an interference filter, a spectrometer device for obtaining at least one item of spectral information and to a mobile communication device, with the features of the independent claims. Advantageous embodiments which might be realized in an isolated fashion or in any arbitrary combinations are listed in the dependent claims as well as throughout the specification.

In a first aspect, a method for manufacturing an interference filter having at least two sections of different filter properties is disclosed. The steps of the method for manufacturing an interference filter having at least two sections of different filter properties may be performed in the given order. A different order, however, may also be feasible. Further, two or more of the method steps may be performed simultaneously. Thereby the method steps may at least partly overlap in time. Further, the method steps may be performed once or repeatedly. Thus, one or more or even all of the method steps may be performed once or repeatedly. The method may comprise additional method steps, which are not listed herein.

The term "interference filter" as used herein is a broad term and is to be given its ordinary and customary meaning to a person of ordinary skill in the art and is not to be limited to a special or customized meaning. The term specifically may refer, without limitation, to a wavelength selective optical element, particularly allowing light having a wavelength that is within a predetermined range to transmit through the interference filter. Particularly light being out of the predetermined range may be significantly attenuated and/or fully be blocked. Typically, an interference filter may comprise a plurality of layers having different refractive indexes. Each layer may have a predefined thickness and a predetermined refractive index for defining the predetermined range. The layers may be of and/or comprise a dielectric material, a metal, a semiconductor material and/or a polymer. The layers may be situated on top of each other in a manner that a first layer is above a second layer, particularly in a vertical direction.

The method is comprising:
(1) providing an interference filter having at least two layers, wherein the at least two layers have different refractive indices;
(2) compressing at least a portion of the interference filter by using a mold in a manner that at least two different sections of the interference filter are
generated, wherein the at least two different sections have different heights. For this aspect, reference may be made to any definition, Embodiment, claim and/or further aspect disclosed anywhere else here within.

The interference filter has at least two layers having different refractive indices. For having the different refractive indices, the at least two layers may be of a different and/or may comprise a different material. The at least two different sections having different heights may have different filter properties.

The term "providing" as used herein is a broad term and is to be given its ordinary and customary meaning to a person of ordinary skill in the art and is not to be limited to a special or customized meaning. The term specifically may refer, without limitation, to a process of making an object available. Providing may comprise bringing the interference filter in a position and/or an orientation in which the mold can be used to compress at least the portion of the interference filter. Providing may comprise placing the interference filter into the mold. The provided interference filter may be a plain interference filter, particularly having one height. The provided interference filter may have no sections of different heigt.

The term "refractive index" as used herein is a broad term and is to be given its ordinary and customary meaning to a person of ordinary skill in the art and is not to be limited to a special or customized meaning. The term specifically may refer, without limitation, to a ratio of the wavelength of light in a vacuum to the wavelength in an optical material. The refractive index may describe the phase velocity of light in a vacuum in relation to the phase velocity of light in the optical material. The refractive index may be a dimensionless number of an optical medium. The refractive index may describe the ability of the optical medium to bend light.

The term "compressing" as used herein is a broad term and is to be given its ordinary and customary meaning to a person of ordinary skill in the art and is not to be limited to a special or customized meaning. The term specifically may refer, without limitation, to squeezing and/or pressing an object in a manner that the object deforms. The term "mold" as used herein is a broad term and is to be given its ordinary and customary meaning to a person of ordinary skill in the art and is not to be limited to a special or customized meaning. The term specifically may refer, without limitation, to an arbitrary stamp like structure used for applying a force onto an object.

For compressing at least the portion of the interference filter by using a mold in a manner that at least two different sections of the interference filter are generated, the mold may be used to apply a pressure to deform the interference filter against, particularly in a manner that the interference filter is forced into contact with at least one contact surface of the mold.

The term "contact surface" as used herein is a broad term and is to be given its ordinary and customary meaning to a person of ordinary skill in the art and is not to be limited to a special or customized meaning. The term specifically may refer, without limitation, to an area in which two objects attach each other. The at least one contact surface of the mold may be the surface against which the interference filter is compressed.

The term "height" as used herein is a broad term and is to be given its ordinary and customary meaning to a person of ordinary skill in the art and is not to be limited to a special or customized meaning. The term specifically may refer, without limitation, to a distance from the bottom of an object to its top. The distance from the bottom of an object to its top may be parallel to a vertical direction. The interference filter comprises at least two different sections have different heights. The at least two different sections have different heights may be arranged next to each other, particularly in a horizontal direction.

The method may further comprise a step of
(3) heating at least the portion of the interference filter to a predefined temperature, particularly before and/or during at least the portion of the interference filter is compressed.

The term "heating" as used herein is a broad term and is to be given its ordinary and customary meaning to a person of ordinary skill in the art and is not to be limited to a special or customized meaning. The term specifically may refer, without limitation, to the process of raising the temperature of an object. The interference filter may be heated to a predetermined temperature corresponding to at least one melting temperature of at least one or any layer of the interference filter. The interference filter may be heated by using the at least one of the mold. Alternatively, the temperature may be heated by using a heating device that is different from the at least one of the mold..

The interference filter may be a bandpass filter. The term "bandpass filter" as used herein is a broad term and is to be given its ordinary and customary meaning to a person of ordinary skill in the art and is not to be limited to a special or customized meaning. The term specifically may refer, without limitation, to an optical filter that may significantly attenuated and/or may block incident radiation having a wavelength below and/or above the predetermined range. Incident radiation having a wavelength within the predefined range may be allowed to transmit through the optical filter.

Any section of the at least two different sections of different heights may be a bandpass filter. Any section of the at least two different sections of different heights may have a different central wavelength. The term "central wavelength" as used herein is a broad term and is to be given its ordinary and customary meaning to a person of ordinary skill in the art and is not to be limited to a special or customized meaning. The term specifically may refer, without limitation, to a wavelength that is in the middle of the upper wavelength of the predetermined wavelength of the light that transmits through the bandpass filter and the lower wavelength of the predetermined wavelength of the light that transmits through the bandpass filter.

Any section of the at least two different sections of different heights may have a different bandwidths. The term "bandwidth" as used herein is a broad term and is to be given its ordinary and customary meaning to a person of ordinary skill in the art and is not to be limited to a special or customized meaning. The term specifically may refer, without limitation, to a difference between the upper wavelength of the predetermined wavelength of the light that transmits through the bandpass filter and the lower wavelength of the predetermined wavelength of the light that transmits through the bandpass filter.

The mold may comprise at least two segments of different heights. Alternatively or in addition, the two segments of different heights of the mold may compress at least the portion of the interference filter differently, particularly in a manner that the at least two different sections of different heights may generated.

The mold may comprise at least one segment describing a curve. Alternatively or in addition, the curve of the at least one segments of the mold may bend at least the portion of the interference filter, particularly in a manner that at least one section of the interference filter describes a curve. The term "curve" as used herein is a broad term and is to be given its ordinary and customary meaning to a person of ordinary skill in the art and is not to be limited to a special or customized meaning. The term specifically may refer, without limitation, to a continuous, smooth line or path that deviates from being straight. The curve may define a path. The curved path may define the horizontal direction.

Compressing at least a portion of the interference filter by using the mold may be part of at least one of:
- a hot embossing process;
- an asymmetric drawing process;
- a thermoforming process.

The term "hot embossing process" as used herein is a broad term and is to be given its ordinary and customary meaning to a person of ordinary skill in the art and is not to be limited to a special or customized meaning. The term specifically may refer, without limitation, to a manufacturing technique used to generate at least one structure on a substrate. The hot embossing process may comprise heating the substrate and/or compressing the substrate by using the mold for generating the at least one structure. The substrate may be the interference filter.

The term "thermoforming process" as used herein is a broad term and is to be given its ordinary and customary meaning to a person of ordinary skill in the art and is not to be limited to a special or customized meaning. The term specifically may refer, without limitation, to a manufacturing process used to generate at least one structure onto at least one thermoplastic sheet. The thermoforming process may comprise heating the thermoplastic sheet and/or compressing the thermoplastic sheet by using the mold for generating the at least one structure. The thermoplastic sheet may be the interference filter.

At least one layer of the at least two layers of the interference filter may be a cavity spacer. Alternatively or in addition, said at least one layer, particularly but not necessarily being the cavity spacer, may be having at least one of:
- a higher glass temperature;
- a higher viscosity and/or lower viscosity,
particularly compared to any one of the further layers of the at least two layers of the interference filter so that the degree of compression of the at least one layer, particularly being the cavity spacer, may be lower than the compression of the further layers.

The term "cavity spacer" as used herein is a broad term and is to be given its ordinary and customary meaning to a person of ordinary skill in the art and is not to be limited to a special or customized meaning. The term specifically may refer, without limitation, to material configured for maintaining at least one distance between two components. By maintaining the at least one distance between two components a cavity is provided between the components. The cavity space may be arranged between two further layers of the at least two layers of the interference filter. At least one further layer may be situated above the cavity spacer, particularly having a first height. Alternatively or in addition, at least one further layer may be situated below the cavity spacer, particularly having a second height. The first height and the second height may be different and/or the same, particularly after compressing.

The term "glass temperature", also referred to as "glass transition temperature", as used herein is a broad term and is to be given its ordinary and customary meaning to a person of ordinary skill in the art and is not to be limited to a special or customized meaning. The term specifically may refer, without limitation, to the one or more of temperatures over which glass transition occurs. Glass transition may be transition of an amorphous materials from a hard state into a viscous state when the temperature is increased. In the viscous state the deformation of the interference filter by its compression may be performed more easy. Typically, the glass temperature of the at least two layers of the interference filter may be on the order of 80C and 110°C in the example of Polystyrol and Perfluoropolymer. Further typically, the higher glass temperature of the layer being the cavity spacer may be on the order of 300°C in the example of Polyimiide.

The term "viscosity" as used herein is a broad term and is to be given its ordinary and customary meaning to a person of ordinary skill in the art and is not to be limited to a special or customized meaning. The term specifically may refer, without limitation, to a resistance to flow of a material in a liquid state. Viscosity may be a measure of how easily a liquid material flows. The higher a viscosity of a material is, the harder it flows; and vice versa. The term "glass transition temperature" refers to a temperature at which the viscosity, particularly being a mechanical parameter, changes.

At least two layers of the at least two layers may have the same refractive index. Alternatively or in addition, the at least two layers of the at least two layers may have a different glass temperature and/or a different viscosity. At least one further layer of the at least two layers may have a different, particularly lower, refractive index. Exemplarily, a configuration comprising for layer LH(1)LH(2) may be possible. The layers L may have a lower refractive index, such as 1.4. The layers H(1) and H(2) may have a higher refractive index, such as 1.7. The materials of the layers H(1), H(2) and/or comprised by the layers H(1), H(2) may have a different glass temperature and/or ductile strength and/or compressibility and/or viscosity. When the layers H(1), H(2) are compressed, said layers H(1), H(2) may have a different thickness. This may have the advantage that in case the interference filter is a bandpass filter, the central wavelength may be adjusted independent of the bandwidth in the compression process.

At least one layer of the at least two layers of the interference filter may be or may comprise at least one polymeric material. At least one layer of the at least two layers of the interference filter may be or may comprise at least one metal. Compressing the at least one layer of the at least two layers of the interference filter being or comprising the at least one metal may generate a plurality of metallic nanoparticles. The generated plurality of metallic nanoparticles may define at least one absorption peak, specifically at least one plasmonic absorption peak, particularly in a manner that the generated metallic nanoparticles serve as a color filter.

The term "nanoparticles", as used herein is a broad term and is to be given its ordinary and customary meaning to a person of ordinary skill in the art and is not to be limited to a special or customized meaning. The term specifically may refer, without limitation, to a composition of a plurality of atoms and/or a plurality of molecules having a size, typically, in the range of 1 to 100 nanometers.

The term "absorption", as used herein is a broad term and is to be given its ordinary and customary meaning to a person of ordinary skill in the art and is not to be limited to a special or customized meaning. The term specifically may refer, without limitation, to the weakening of at least a portion of the light, particularly depending on a wavelength, when impinging and/or entering a medium, such as the interference filter. Thereby, the medium may be energetically excited. The light that reflects and/or scatters at the medium may miss the absorbed portion of the light. Alternatively or in addition, the light that transmits through the medium may miss the weakened portion of the light. Thereby, the spectrum of the reflected, scattered and/or transmitted light may be manipulated and, particularly, miss the absorbed portion of the light. Consequently, the color of the reflected, scattered and/or transmitted light may be manipulated in a manner that the nanoparticles act as a "color filter". The "absorption peak" may describe the dependency of the amount of absorption for one or more wavelengths. The absorption peak may be a characteristic of the color filter. A "plasmonic absorption peak" may be at least partially caused by an excitation of one or more surface plasmons of a nanoparticle.

The maximum height of the at least two different sections of the interference filter having the different heights may be below 250 µm, preferably below 100 µm, particularly in order to decrease stray light between the at least two different sections of the interference filter having the different heights. The term "stray light", as used herein is a broad term and is to be given its ordinary and customary meaning to a person of ordinary skill in the art and is not to be limited to a special or customized meaning. The term specifically may refer, without limitation, to light in an optical system, particularly comprising the interference filter, which was not intended. The stray light may be from at least one intended light source, but follow one or more paths other than intended. Alternatively or in addition, the stray light may be from a further light source other than the intended light source.

The method may comprise a step of inserting at least one material configured for avoiding transmission of light between the at least two different sections of different heights between the at least two different sections of different heights. Particularly for inserting between the at least two different sections of different heights the at least one material configured for avoiding transmission of light between the at least two different sections of different heights, the mold may comprises at least one embossing cavity for generating at least one embossed impression between the at least two different sections of different heights when compressing at least the portion of the interference filter. Alternatively or in addition, particularly for inserting between the at least two different sections of different heights the at least one material configured for avoiding transmission of light between the at least two different sections of different heights, the embossed impression may be filled, particularly with the at least one material configured for avoiding transmission of light between the at least two different sections of different heights

The term "embossing cavity", as used herein is a broad term and is to be given its ordinary and customary meaning to a person of ordinary skill in the art and is not to be limited to a special or customized meaning. The term specifically may refer, without limitation, to an arbitrary structure of the mold configured for creating an impression. The "impression" may be an indentation and/or a gap and/or a recess. The impression may be between the at least two different sections of different heights in the horizontal direction. The impression may be filled with at least one material configured for avoiding transmission of light between the at least two different sections of different heights by depositing said material.

The at least one material configured for avoiding transmission of light between the at least two different sections may be or may comprise at least one absorbing material, particularly wherein the at least one absorbing material is at least one of: an ink, a photoresist or a resin, particularly comprising for an absorbing pigment, such as carbon black, a metal compounds, an organic pigments, an absorbing dye. The at least one material configured for avoiding transmission of light between the at least two different sections may be or may comprise at least one reflecting material, particularly wherein the at least one reflecting material is at least one of: gold, metal, such as aluminum.

The at least one material configured for avoiding transmission of light between the at least two different sections of different heights may be comprised by at least one of: a dielectric mirror, an interface configured for generating Fresnel reflection. For generating the Fresnel reflection, the interface may provide a sufficient refractive index contrast to achieve Fresnel reflection for the relevant incidence angles.

In a further aspect, an interference filter is disclosed. The interference filter comprises:
i. at least two layers, wherein the at least two layers have a different refractive index;
ii. at least two different sections, wherein the at least two different sections have different heights.

For this aspect, reference may be made to any definition, Embodiment, claim and/or further aspect disclosed anywhere else here within.

Any section of the at least two different sections of different heights may be a bandpass filter. Alternatively or in addition, any section of the at least two different sections of different heights may have a different central wavelength. The interference filter may comprise at least one material inserted between the at least two different sections of different heights configured for avoiding transmission of light. The at least one material configured for avoiding transmission of light between the at least two different sections may be or may comprise at least one absorbing material, particularly wherein the absorbing material is at least one of: an ink, a photoresist or a resin, particularly comprising for an absorbing pigment, such as carbon black, a metal compounds, an organic pigments, an absorbing dye. The at least one material configured for avoiding transmission of light between the at least two different sections may be or may comprise at least one reflecting material, particularly wherein the at least one reflecting material is at least one of: gold, metal, such as aluminum. The at least one material configured for avoiding transmission of light between the at least two different sections of different heights may be comprised by at least one of: a dielectric mirror, an interface configured for generating Fresnel reflection.

The interference filter may be manufactured by performing the method for manufacturing an interference filter as described elsewhere herein.

In a further aspect, a spectrometer device for obtaining at least one item of spectral information of an object is disclosed. The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

The spectrometer device comprising:
a. at least one light source configured for generating illumination light for illuminating the object in a manner that the object generates detection light;
b. at least one detector configured for generating at least one detector signal when receiving detection light from the object, wherein the detector comprises a plurality of photosensitive elements sensitive to differing wavelength intervals;
c. at least one interference filter as disclosed elsewhere herein, wherein the interference filter is disposed in a beam path of the illumination light or a beam path of the detection light, wherein the at least one interference filter is arranged in a manner that the plurality of photosensitive elements is exposed to an individual spectral range of the light from the object;
d. at least one evaluation unit configured for evaluating the at least one detector signal for obtaining the at least one item of spectral information.

For this aspect, reference may be made to any definition, Embodiment, claim and/or further aspect disclosed anywhere else here within.

The spectrometer device comprises at least one light source configured for generating illumination light for illuminating the object in a manner that the object generates detection light.

The term "light" as used herein is a broad term and is to be given its ordinary and customary meaning to a person of ordinary skill in the art and is not to be limited to a special or customized meaning. The term specifically may refer, without limitation, to electro-magnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 µm, wherein the range of 760 nm to 1.5 µm is usually denominated as "near infrared spectral range" (NIR) while the range from 1.5 µ to 15 µm is denoted as "mid infrared spectral range" (MidiR) and the range from 15 µm to 1000 µm as "far infrared spectral range" (FIR). Preferably, light used for the typical purposes of the present invention is light in the infrared (IR) spectral range, more preferred, in the near infrared (NIR) and/or the mid infrared spectral range (MidiR), especially the light having a wavelength of 1 µm to 5 µm, preferably of 1 µm to 3 µm. This is due to the fact that many material properties or properties on the chemical constitution of many objects may be derived from the near infrared spectral range. It shall be noted, however, that spectroscopy in other spectral ranges is also feasible and within the scope of the present invention.

Consequently, the term "light source", also referred to as an "illumination source", as used herein is a broad term and is to be given its ordinary and customary meaning to a person of ordinary skill in the art and is not to be limited to a special or customized meaning. The term specifically may refer, without limitation, to an arbitrary device configured for generating or providing light in the sense of the above-mentioned definition. The light source specifically may be or may comprise at least one electrical light source, such as an electrically driven light source.

In spectroscopy, various sources and paths of light are to be distinguished. In the context of the present invention, a nomenclature is used which, firstly, denotes light propagating from the light source to the object as "illuminating light" or "illumination light". Secondly, light propagating from the object to the detector is denoted as "detection light". The detection light may comprise at least one of illumination light reflected by the object, illumination light scattered by the object, illumination light transmitted by the object, luminescence light generated by the object, e.g. phosphorescence or fluorescence light generated by the object after optical, electrical or acoustic excitation of the object by the illumination light or the like. Thus, the detection light may directly or indirectly be generated through the illumination of the object by the illumination light.

The spectrometer device is comprising at least one detector configured for generating at least one detector signal when receiving detection light from the object, wherein the detector comprises a plurality of photosensitive elements sensitive to differing wavelength intervals.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the detector to the evaluation unit, such that the detector and the evaluation unit may be directly or indirectly connected.

The spectrometer device is comprising at least one interference filter as disclosed elsewhere herein, wherein the interference filter is disposed in a beam path of the illumination light or a beam path of the detection light, wherein the at least one interference filter is arranged in a manner that the plurality of photosensitive elements is exposed to an individual spectral range of the light from the object.

The spectrometer device is comprising at least one evaluation unit configured for evaluating the at least one detector signal for obtaining the at least one item of spectral information.

The term "to evaluate", as used herein, is a broad term and is to be given its ordinary and customary meaning to a person of ordinary skill in the art and is not to be limited to a special or customized meaning. The term specifically may refer, without limitation, to the process of processing at least one first item of information in order to generate at least one second item of information thereby. Consequently, the term "evaluation unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured to evaluate or process at least one first item of information, in order to generate at least one second item of information thereof. Thus, specifically, the evaluation unit may be configured for processing at least one input signal and to generate at least one output signal thereof. The at least one input signal, as an example, may comprise at least one detector signal provided directly or indirectly by the at least one detector.

The term "spectroscopic information", also referred to as "spectral information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

The light source may be a thermal radiator. The thermal radiator may be selected from an incandescent lamp or a thermal infrared emitter. The term "incandescent lamp" as used herein is a broad term and is to be given its ordinary and customary meaning to a person of ordinary skill in the art and is not to be limited to a special or customized meaning. The term specifically may refer, without limitation, to an electric light having a heatable element, such as a wire filament heated, which is capable of being heated to a temperature at which it emits light, especially infrared light. Since the incandescent lamp can, therefore, be considered as a thermal emitter within the infrared spectral range, an emission power of the incandescent lamp decreases with increasing wavelength. The thermal radiator may be selected from an incandescent lamp or a thermal infrared emitter. The term "thermal infrared emitter" as used herein is a broad term and is to be given its ordinary and customary meaning to a person of ordinary skill in the art and is not to be limited to a special or customized meaning. The term specifically may refer, without limitation, to a micro-machined thermally emitting device, which comprises a radiation emitting surface as the light source that emits the optical radiation to be monitored.

Alternatively or in addition, the light source may be a laser, specifically a vertical cavity surface emitting laser (VCSEL), particularly emitting at least one wavelength in the infrared region.

The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. VCSELs are generally known to the skilled person such as from WO 2017/222618 A.

Alternatively or in addition, the light source may be a light-emitting diode (LED), specifically a LED emitting light that is at least partially located in the infrared spectral range. Alternatively or in addition, a LED emitting light that is illuminating a luminescent material, specifically a phosphor, for light-conversion of light generated by the LED, wherein the luminescent material generates converted light that is at least partly located in the near-infrared spectral range.

The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD) In the following, without narrowing the possible embodiments of the light-emitting diode to any of the before-mentioned physical principles or setups, the abbreviation "LED" will be used for any type of light-emitting diode.

The light source may be emitting infrared radiation.

In a further aspect, a mobile communication device is disclosed, wherein the mobile communication device comprises a spectrometer device as described elsewhere herein. For this aspect, reference may be made to any definition, Embodiment, claim and/or further aspect disclosed anywhere else here within.

The term "mobile communication device", as used herein, is a broad term and is to be given its ordinary and customary meaning to a person of ordinary skill in the art and is not to be limited to a special or customized meaning. The term specifically may refer, without limitation, to a portable electronic device configured for enabling wireless communication over a network. The network may be a cellular network. The term "cellular network" may refer to a network configured for providing wireless communication coverage over a large geographical area through a system comprising at least one of: a plurality of base stations, a plurality of cell towers, and a plurality of radio transceivers.

The mobile communication device may be selected from the group consisting of: a cell phone, a smart phone, and/or a tablet computer, and/or a laptop, and/or a virtual reality device, and/or a wearable, such as a smart watch.

The mobile communication device may be portable. The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 m³, specifically of no more than 0.01 m³, more specifically no more than 0.001 m³ or even no more than 500 mm³. In particular, as an example, the portable spectrometer device may have dimensions of e.g. 10 mm by 10 mm by 5 mm.

The method, the interference filter, the spectrometer device and the mobile communication device according to the present invention, in one or more of the above-mentioned embodiments and/or in one or more of the embodiments described in further detail below, provide a large number of advantages over known devices and methods of similar kind. Specifically, the methods allow manufacturing interference filters having a decreased size. The interference filter is thus advantageously small.

A plain interference filter may be further processed after its drawing process to generate spatially separated interference filters with different filter properties, in particular center wavelengths. This further processing may be a process like hot embossing, asymmetric drawing and/or thermoforming.

The following process may be advantageous:
- A film may be drawn which results in a plain interference filter having a bandpass characteristic;
- A mold may be pressed into the plain interference filter and, thereby, may compress the interference filter differently depending on the mold structure.

The resulting interference filter may have different regions, which may have been compressed with a differing degree resulting in bandpasses with differing center wavelengths. The resulting interference filter may be placed on a detector array of a spectrometer.

Hot embossing and/or thermoforming may generate lateral structures well below structures available from injection molding and/or die cutting processes. This may allow a significant improvement of the miniaturization. Further, the method may be scalable. Additionally, the method may yields structures, that may also have three dimensional shapes and therefore allow integration onto, for example, lenses in camera modules.

Summarizing and without excluding further possible embodiments, the following embodiments may be envisaged:
Embodiment 1: A method for manufacturing an interference filter having at least two sections of different filter properties, the method comprising:
   (1) providing an interference filter having at least two layers, wherein the at least two layers have different refractive indices;
   (2) compressing at least a portion of the interference filter by using a mold in a manner that at least two different sections of the interference filter are generated, wherein the at least two different sections have different heights.
Embodiment 2: The method according to the preceding Embodiment, the method further comprising a step of
   (3) heating at least the portion of the interference filter to a predefined temperature, particularly before and/or during at least the portion of the interference filter is compressed.
Embodiment 3: The method according to any one of the preceding Embodiments, wherein the interference filter is a bandpass filter.
Embodiment 4: The method according to any one of the preceding Embodiments, wherein any section of the at least two different sections of different heights is a bandpass filter.
Embodiment 5: The method according to the preceding Embodiment, wherein any section of the at least two different sections of different heights has a different central wavelength.
Embodiment 6: The method according to any one of the preceding Embodiments, wherein the mold comprises at least two segments of different heights, wherein the two segments of different heights of the mold compress at least the portion of the interference filter differently in a manner that the at least two different sections of different heights are generated.
Embodiment 7: The method according to any one of the preceding Embodiments, wherein the mold comprises at least one segment describing a curve, wherein the curve of the at least one segments of the mold bends at least the portion of the interference filter in a manner that at least one section of the interference filter describes a curve.
Embodiment 8: The method according to any one of the preceding Embodiments, wherein compressing at least a portion of the interference filter by using the mold is part of at least one of:
   - a hot embossing process;
   - an asymmetric drawing process;
   - a thermoforming process.
Embodiment 9: The method according to any one of the preceding Embodiments, wherein at least one layer of the at least two layers of the interference filter, particularly is a cavity spacer and, is having at least one of:
   - a higher glass temperature;
   - a higher viscosity and/or lower viscosity,
   compared to any one of the further layers of the at least two layers of the interference filter so that the degree of compression of the at least one layer, particularly being the cavity spacer, is lower than the compression of the further layers.
Embodiment 10: The method according to any one of the preceding Embodiments, wherein at least two layers of the at least two layers have the same refractive index, wherein the at least two layers of the at least two layers have a different glass temperature and/or a different viscosity.
Embodiment 11: The method according to the preceding Embodiment, wherein at least one further layer of the at least two layers has a different, particularly lower, refractive index.
Embodiment 12: The method according to any one of the preceding Embodiments, wherein at least one layer of the at least two layers of the interference filter is or comprises at least one polymeric material.
Embodiment 13: The method according to any one of the preceding Embodiments, wherein at least one layer of the at least two layers of the interference filter is or comprises at least one metal.
Embodiment 14: The method according to the preceding Embodiment, wherein compressing the at least one layer of the at least two layers of the interference filter being or comprising the at least one metal generates a plurality of metallic nanoparticles.
Embodiment 15: The method according to the preceding Embodiment, wherein the generated plurality of metallic nanoparticles define at least one absorption peak, specifically at least one plasmonic absorption peak,
   particularly in a manner that the generated metallic nanoparticles serve as a color filter.
Embodiment 16: The method according to any one of the preceding Embodiments, wherein the maximum height of the at least two different sections of the interference filter having the different heights is below 250 µm, preferably below 100 µm,
   particularly in order to decrease stray light between the at least two different sections of the interference filter having the different heights.
Embodiment 17: The method according to any one of the preceding Embodiments, wherein the method comprises a step of inserting at least one material configured for avoiding transmission of light between the at least two different sections of different heights between the at least two different sections of different heights.
Embodiment 18: The method according to the preceding Embodiment, wherein, for inserting between the at least two different sections of different heights the at least one material configured for avoiding transmission of light between the at least two different sections of different heights, the mold comprises at least one embossing cavity for generating at least one embossed impression between the at least two different sections of different heights when compressing at least the portion of the interference filter, wherein the embossed impression is filled with the at least one material configured for avoiding transmission of light between the at least two different sections of different heights.
Embodiment 19: The method according any one of the two preceding Embodiments, wherein the at least one material configured for avoiding transmission of light between the at least two different sections is or comprises at least one absorbing material, particularly wherein the at least one absorbing material is at least one of:
   - an ink,
   - a photoresist or a resin, particularly comprising for an absorbing pigment, such as carbon black,
   - a metal compounds,
   - an organic pigments,
   - an absorbing dye.
Embodiment 20: The method according any one of the three preceding Embodiments, wherein the at least one material configured for avoiding transmission of light between the at least two different sections is or comprises at least one reflecting material, particularly wherein the at least one reflecting material is at least one of:
   - gold,
   - metal, such as aluminum.
Embodiment 21: The method according any one of the four preceding Embodiments, wherein the at least one material configured for avoiding transmission of light between the at least two different sections of different heights is comprised by at least one of:
   - a dielectric mirror,
   - an interface configured for generating Fresnel reflection.
Embodiment 22: An interference filter, wherein the interference filter comprises:
   i. at least two layers, wherein the at least two layers have a different refractive index;
   ii. at least two different sections, wherein the at least two different sections have different heights.
Embodiment 23: The interference filter according to the preceding Embodiment referring to an interference filter, wherein any section of the at least two different sections of different heights is a bandpass filter, and wherein any section of the at least two different sections of different heights has a different central wavelength.
Embodiment 24: The interference filter according to any one of the preceding Embodiments referring to an interference filter, wherein the interference filter comprises at least one material inserted between the at least two different sections of different heights configured for avoiding transmission of light.
Embodiment 25: The interference filter according to the preceding Embodiment referring to an interference filter, wherein the at least one material configured for avoiding transmission of light between the at least two different sections is or comprises at least one absorbing material, particularly wherein the absorbing material is at least one of:
   - an ink,
   - a photoresist or a resin, particularly comprising for an absorbing pigment, such as carbon black,
   - a metal compounds,
   - an organic pigments,
   - an absorbing dye.
Embodiment 26: The interference filter according to any one of the two preceding Embodiments referring to an interference filter, wherein the at least one material configured for avoiding transmission of light between the at least two different sections is or comprises at least one reflecting material, particularly wherein the at least one reflecting material is at least one of:
   - gold,
   - metal, such as aluminum.
Embodiment 27: The interference filter according any one of the three preceding Embodiments, wherein the at least one material configured for avoiding transmission of light between the at least two different sections of different heights is comprised by at least one of:
   - a dielectric mirror,
   - an interface configured for generating Fresnel reflection.
Embodiment 28: The interference filter according to any one of the preceding Embodiments referring to an interference filter, wherein the interference filter is manufactured by performing the method for manufacturing an interference filter according to any one of the preceding Embodiments.
Embodiment 29: A spectrometer device for obtaining at least one item of spectral information of an object, the spectrometer device comprising:
   a. at least one light source configured for generating illumination light for illuminating the object in a manner that the object generates detection light;
   b. at least one detector configured for generating at least one detector signal when receiving detection light from the object, wherein the detector comprises a plurality of photosensitive elements sensitive to differing wavelength intervals;
   c. at least one interference filter according to any one of the preceding Embodiments referring to an interference filter, wherein the interference filter is disposed in a beam path of the illumination light or a beam path of the detection light, wherein the at least one interference filter is arranged in a manner that the plurality of photosensitive elements is exposed to an individual spectral range of the light from the object;
   d. at least one evaluation unit configured for evaluating the at least one detector signal for obtaining the at least one item of spectral information.
Embodiment 30: The spectrometer device according to the preceding Embodiment referring to a spectrometer device, wherein the light source is at least one of:
   - a thermal radiator;
   - a laser, specifically a vertical cavity surface emitting laser (VCSEL), particularly emitting at least one wavelength in the infrared region;
   - a light-emitting diode (LED), particularly
      ∘ a LED emitting light that is at least partially located in the infrared spectral range and/or
      ∘ a LED illuminating a phosphor for light-conversion of light generated by the LED, wherein the luminescent material generates converted light that is at least partly located in the near-infrared spectral range.
Embodiment 31: The spectrometer device according to any one of the preceding Embodiments referring to a spectrometer device, wherein the light source is emitting infrared radiation.
Embodiment 32: A mobile communication device, wherein the mobile communication device comprises a spectrometer device according the any one of the preceding Embodiments referring to a spectrometer device.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Fig. 1: shows an exemplary method for manufacturing an interference filter having at least two sections of different filter properties;
- Fig. 2a and 2b: show an exemplary uncompressed and compressed interference filter;
- Fig. 3: shows an exemplary transmission spectrum of the interference filter;
- Fig. 4: shows an exemplary mold used for compressing the interference filter;
- Fig. 5: shows a further exemplary mold and a further exemplary interference filter;
- Fig. 6: shows an exemplary spectrometer device for obtaining at least one item of spectral information of an object.

### Detailed description of the embodiments

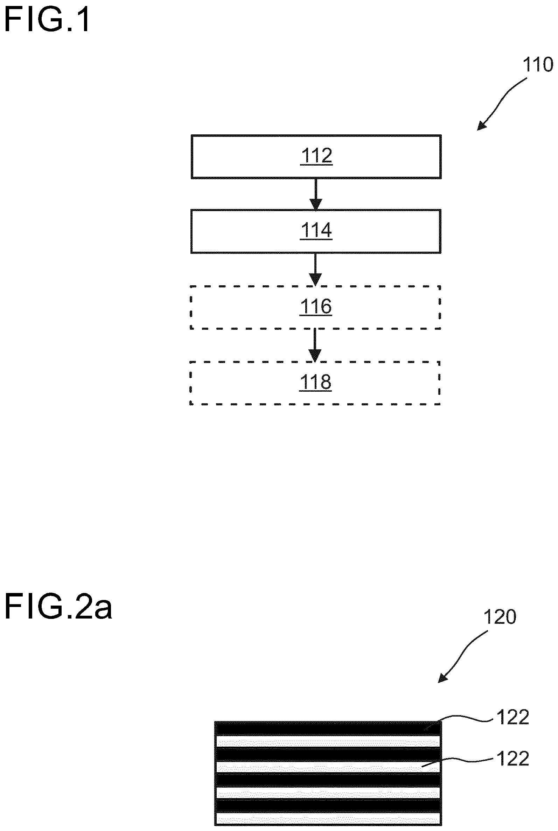

In Figure 1, an exemplary method 110 for manufacturing an interference filter 120 having at least two sections 124 of different filter properties is disclosed

The method 110 is comprising:
(1) in a step 112, providing an interference filter 120 having at least two layers 122, wherein the at least two layers 122 have different refractive indices;
(2) in a step 114, compressing at least a portion of the interference filter 120 by using a mold 142 in a manner that at least two different sections 124 of the interference filter 120 are generated, wherein the at least two different sections 124 have different heights 126.

Compressing, in step 114, at least a portion of the interference filter 120 by using the mold 142 may be part of at least one of:
- a hot embossing process;
- an asymmetric drawing process;
- a thermoforming process.

The method 110 may further comprise a step of
(3) in a step 116, heating at least the portion of the interference filter 120 to a predefined temperature, particularly before and/or during at least the portion of the interference filter 120 is compressed.

The method 110 may comprise a step 118 of inserting at least one material configured for avoiding transmission of light between the at least two different sections 124 of different heights 126 between the at least two different sections 124 of different heights 126.

Particularly for inserting between the at least two different sections 124 of different heights 126 the at least one material configured for avoiding transmission of light between the at least two different sections 124 of different heights 126, the mold 142 may comprises at least one embossing cavity for generating at least one embossed impression between the at least two different sections 124 of different heights 126 when compressing at least the portion of the interference filter 120. Alternatively or in addition, particularly for inserting between the at least two different sections 124 of different heights 126 the at least one material configured for avoiding transmission of light between the at least two different sections 124 of different heights 126, the embossed impression may be filled, particularly with the at least one material configured for avoiding transmission of light between the at least two different sections 124 of different heights 126.

The at least one material configured for avoiding transmission of light between the at least two different sections 124 may be or may comprise at least one absorbing material, particularly wherein the at least one absorbing material is at least one of: an ink, a photoresist or a resin, particularly comprising for an absorbing pigment, such as carbon black, a metal compounds, an organic pigments, an absorbing dye.

The at least one material configured for avoiding transmission of light between the at least two different sections 124 may be or may comprise at least one reflecting material, particularly wherein the at least one reflecting material is at least one of: gold, metal, such as aluminum.

The at least one material configured for avoiding transmission of light between the at least two different sections 124 of different heights 126 may be comprised by at least one of: a dielectric mirror, an interface configured for generating Fresnel reflection.

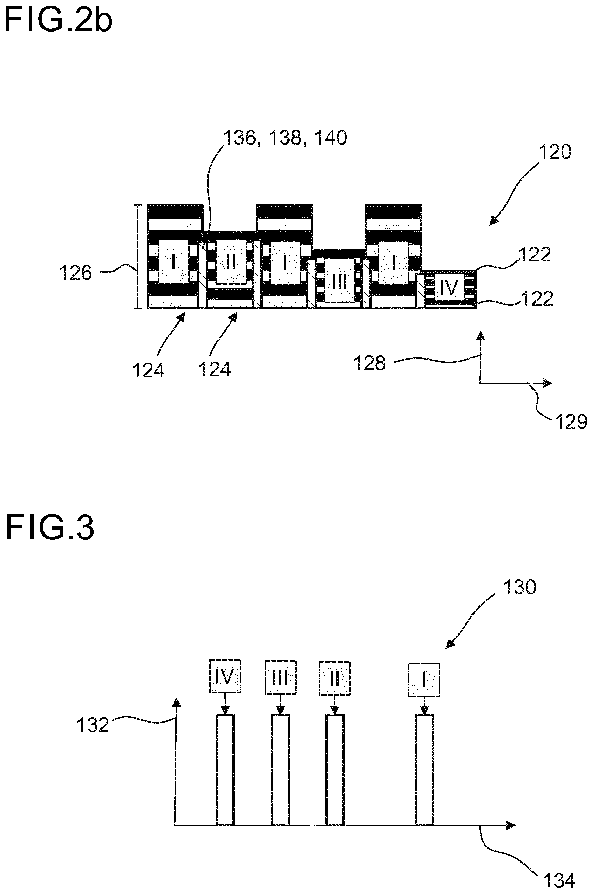

In Figure 2a, an exemplary interference filter 120 is shown before the filter is compressed. In step 112, said exemplary interference filter 120 may be provided. In Figure 2b, the exemplary interference filter 120 of Figure 2a is shown when the interference filter 120 is compressed. The interference filter 120 comprises:
i. at least two layers 122, wherein the at least two layers 122 have different refractive indices;
ii. at least two different sections 124, wherein the at least two different sections have different heights 126.

The height 126 is parallel to a vertical direction 128. The different sections 124 are arranged next to each other in a horizontal direction 129. The different sections 124 are indicated by the Roman numerals I, II, III and IV.

In Figure 3, the transmission spectrum 130 of the compressed exemplary interference filter 120 is shown. On the vertical axis 132, the percentage of the transmitted light is illustrated. On the horizontal axis 134, the wavelength of the transmitted light is illustrated in nanometers. As may be derived from Figure 3, the interference filter 120 may be a bandpass filter. Any section 124 of the at least two different sections 124 of different heights 126 may be a bandpass filter. Alternatively or in addition, any section 124 of the at least two different sections 124 of different heights 126 may have a different central wavelength.

The interference filter 120 may comprise at least one material 136 inserted between the at least two different sections 124 of different heights 126 configured for avoiding transmission of light, particularly between said two different sections 124.

The at least one material 136 configured for avoiding transmission of light between the at least two different sections 124 may be or may comprise at least one absorbing material, particularly wherein the absorbing material 136 is at least one of: an ink, a photoresist or a resin, particularly comprising for an absorbing pigment, such as carbon black, a metal compounds, an organic pigments, an absorbing dye. The at least one material 136 configured for avoiding transmission of light between the at least two different sections 124 may be or may comprise at least one reflecting material 136, particularly wherein the at least one reflecting material 136 is at least one of: gold, metal, such as aluminum.

The at least one material 136 configured for avoiding transmission of light between the at least two different sections of different heights 126 may be comprised by at least one of: a dielectric mirror 138, an interface 140 configured for generating Fresnel reflection.

The interference filter 120 may be manufactured by performing the method 110 for manufacturing an interference filter 120 as described elsewhere herein.

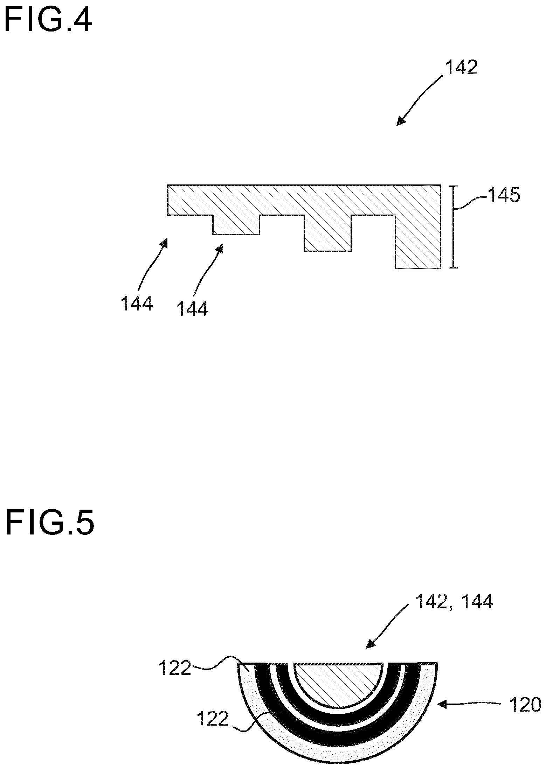

In Figure 4, an exemplary mold 142 that may be used to compress the an exemplary interference filter 120 shown in Fig. 2a is illustrated. The mold 142 may comprise at least two segments 144 of different heights 145. Alternatively or in addition, the two segments 144 of different heights 145 of the mold 142 may compress at least the portion of the interference filter 120 differently, particularly in a manner that the at least two different sections 124 of different heights 126 may generated.

At least one layer 122 of the at least two layers 122 of the interference filter 120 may be a cavity spacer (not depicted). Alternatively or in addition, particularly said, at least one layer 122 may be having at least one of:
- a higher glass temperature;
- a higher viscosity and/or lower viscosity,
particularly compared to any one of the further layers 122 of the at least two layers 122 of the interference filter 120 so that the degree of compression of the at least one layer 122, particularly being the cavity spacer, may be lower than the compression of the further layers 122.

At least two layers 122 of the at least two layers 122 may have the same refractive index. Alternatively or in addition, the at least two layers 122 of the at least two layers 122 may have a different glass temperature and/or a different viscosity. At least one further layer 122 of the at least two layers 122 may have a different, particularly lower, refractive index.

The at least one layer 122 of the at least two layers 122 of the interference filter 120 may be or may comprise at least one polymeric material. The at least one layer 122 of the at least two layers 122 of the interference filter 120 may be or may comprise at least one metal.

Compressing the at least one layer 122 of the at least two layers 122 of the interference filter 120 being or comprising the at least one metal may generate a plurality of metallic nanoparticles. The generated plurality of metallic nanoparticles may define at least one absorption peak, specifically at least one plasmonic absorption peak, particularly in a manner that the generated metallic nanoparticles serve as a color filter.

The maximum height 126 of the at least two different sections 124 of the interference filter having the different height 126s may be below 250 µm, preferably below 100 µm, particularly in order to decrease stray light between the at least two different sections 124 of the interference filter 120 having the different heights 126.

As may be derived from Figure 5, a further exemplary mold 142 may comprise at least one segment 144 describing a curve (for the sake of simplicity only one curved segment 144 is depicted). Alternatively or in addition, the curve of the at least one segment 144 of the mold 142 may bend at least the portion of the interference filter 120, particularly in a manner that at least one section 124 of the interference filter 120 describes a curve (for the sake of simplicity only one curved section 124 is depicted).

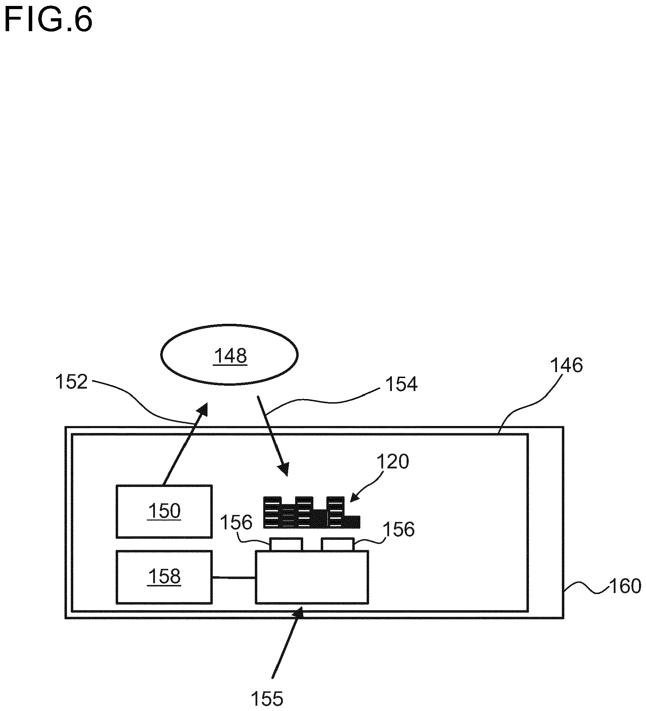

In Fig. 6, an exemplary spectrometer device 146 for obtaining at least one item of spectral information of an object 148 is disclosed. The spectrometer device 146 comprising:
a. at least one light source 150 configured for generating illumination light 152 for illuminating the object 148 in a manner that the object 148 generates detection light 154;
b. at least one detector 155 configured for generating at least one detector signal when receiving detection light 154 from the object 148, wherein the detector 155 comprises a plurality of photosensitive elements 156 sensitive to differing wavelength intervals;
c. at least one interference filter 120 as disclosed elsewhere herein, wherein the interference filter 120 is disposed in a beam path of the illumination light 152 or a beam path of the detection light 154 (as exemplarily depicted), wherein the at least one interference filter 120 is arranged in a manner that the plurality of photosensitive elements 156 is exposed to an individual spectral range of the light 154 from the object 148;
d. at least one evaluation unit 158 configured for evaluating the at least one detector signal for obtaining the at least one item of spectral information.

An exemplary mobile communication device 160 comprises the spectrometer device 146.

The light source 150 may be at least one of:
- a thermal radiator;
- a laser, specifically a vertical cavity surface emitting laser (VCSEL), particularly emitting at least one wavelength in the infrared region;
- a light-emitting diode (LED), particularly
   ∘ a LED emitting light that is at least partially located in the infrared spectral range and/or
   ∘ a LED illuminating a phosphor for light-conversion of light generated by the LED, wherein the luminescent material generates converted light
   that is at least partly located in the near-infrared spectral range. The light source 158 may be emitting infrared radiation.

### List of reference numbers

- 110: method for manufacturing an interference filter
- 112: providing an interference filter
- 114: compressing at least a portion of the interference filter
- 116: heating at least the portion of the interference
- 118: inserting at least one material between two sections of different heights
- 120: interference filter
- 122: layer
- 124: section
- 126: height
- 128: vertical direction
- 129: horizontal direction
- 130: transmission spectrum
- 132: vertical axis
- 134: horizontal axis
- 136: material
- 138: dielectric mirror
- 140: interface
- 142: mold
- 144: segment
- 145: height
- 146: spectrometer device
- 148: object
- 150: light source
- 152: illumination light
- 154: detection light
- 155: detector
- 156: photosensitive element
- 158: evaluation unit
- 160: mobile communication device

## Claims

1. A method (110) for manufacturing an interference filter (120) having at least two sections (124) of different filter properties, the method (110) comprising:
(1) providing an interference filter (120) having at least two layers (122), wherein the at least two layers (122) have different refractive indices;
(2) compressing at least a portion of the interference filter (120) by using a mold (142) in a manner that at least two different sections (124) of the interference filter (120) are generated, wherein the at least two different sections (124) have different heights (126).

2. The method (110) according to the preceding claim, the method (110) further comprising a step of
(3) heating at least the portion of the interference filter (120) to a predefined temperature .

3. The method (110) according to any one of the preceding claims, wherein any section (124) of the at least two different sections (124) of different heights (126) is a bandpass filter, wherein any section (124) of the at least two different sections (124) of different heights (126) has a different central wavelength.

4. The method (110) according to any one of the preceding claims, wherein the mold (142) comprises at least one segment (144) describing a curve, wherein the curve of the at least one segments (144) of the mold (142) bends at least the portion of the interference filter (120) in a manner that at least one section (124) of the interference filter (120) describes a curve.

5. The method (110) according to any one of the preceding claims, wherein at least one layer (122) of the at least two layers (122) of the interference filter (120), particularly is a cavity spacer and, is having at least one of:
- a higher glass temperature;
- a higher viscosity and/or lower viscosity,
compared to any one of the further layers (122) of the at least two layers (122) of the interference filter (120) so that the degree of compression of the at least one layer (122) is lower than the compression of the further layers (122).

6. The method (110) according to any one of the preceding claims, wherein at least two layers (122) of the at least two layers (122) have the same refractive index, wherein the at least two layers (122) of the at least two layers (122) have a different glass temperature and/or a different viscosity, wherein at least one further layer (122) of the at least two layers (122) has a different, particularly lower, refractive index.

7. The method (110) according to any one of the preceding claims, wherein at least one layer (122) of the at least two layers (122) of the interference filter (120) is or comprises at least one polymeric material.

8. The method (110) according to any one of the preceding claims, wherein at least one layer (122) of the at least two layers (122) of the interference filter (120) is or comprises at least one metal, wherein compressing the at least one layer (122) of the at least two layers (122) of the interference filter (120) being or comprising the at least one metal generates a plurality of metallic nanoparticles.

9. The method (110) according to the preceding claim, wherein the generated plurality of metallic nanoparticles define at least one absorption peak in a manner that the generated metallic nanoparticles serve as a color filter.

10. The method (110) according to any one of the preceding claims, wherein the maximum height (126) of the at least two different sections (124) of the interference filter (120) having the different heights (126) is below 250 µm, preferably below 100 µm.

11. The method (110) according to any one of the preceding claims, wherein the method (110) comprises a step of inserting at least one material (136) configured for avoiding transmission of light between the at least two different sections (124) of different heights (126) between the at least two different sections (124) of different heights (126), wherein, for inserting between the at least two different sections (124) of different heights (126) the at least one material (136) configured for avoiding transmission of light between the at least two different sections (124) of different heights (126), the mold (142) comprises at least one embossing cavity for generating at least one embossed impression between the at least two different sections (124) of different heights (126) when compressing at least the portion of the interference filter (120), wherein the embossed impression is filled with the at least one material (136) configured for avoiding transmission of light between the at least two different sections (124) of different heights (126).

12. An interference filter (120), wherein the interference filter (120) comprises:
i. at least two layers (122), wherein the at least two layers (122) have a different refractive index;
ii. at least two different sections (124), wherein the at least two different sections (124) have different heights (126).

13. The interference filter (120) according to the preceding claim referring to an interference filter (120), wherein the interference filter (120) is manufactured by performing the method (110) for manufacturing an interference filter (120) according to any one of the preceding claims.

14. A spectrometer device (146) for obtaining at least one item of spectral information of an object (148), the spectrometer device (146) comprising:
a. at least one light source (150) configured for generating illumination light (152) for illuminating the object (148) in a manner that the object (148) generates detection light (154);
b. at least one detector (155) configured for generating at least one detector signal when receiving detection light (154) from the object (148), wherein the detector (155) comprises a plurality of photosensitive elements (156) sensitive to differing wavelength intervals;
c. at least one interference filter (120) according to any one of the preceding claims referring to an interference filter (120), wherein the interference filter (120) is disposed in a beam path of the illumination light (152) or a beam path of the detection light (154), wherein the at least one interference filter (120) is arranged in a manner that the plurality of photosensitive elements (156) is exposed to an individual spectral range of the light from the object (148);
d. at least one evaluation unit (158) configured for evaluating the at least one detector signal for obtaining the at least one item of spectral information.

15. A mobile communication device (160), wherein the mobile communication device (160) comprises a spectrometer device (146) according the preceding claim referring to a spectrometer device (146).
